# EUROPEAN PATENT SPECIFICATION

(11) **EP 3 036 096 B1**
(45) Date of publication and mention of the grant of the patent: **03.10.2018**
(21) Application number: 13891874.3
(22) Date of filing: 19.08.2013
(51) Int. Cl.: B32B 1/02, B32B 27/08, B65D 65/40

(54) **METALLIZED LAMINATED STRUCTURES FOR FOOD PACKAGING**
METALLISIERTE LAMINATSTRUKTUREN FÜR LEBENSMITTELVERPACKUNGEN
STRUCTURES MÉTALLISÉES STRATIFIÉES DESTINÉES À L'EMBALLAGE DE PRODUITS ALIMENTAIRES

(43) Date of publication of application: 29.06.2016
(73) Proprietor: BEMIS COMPANY, INC., Neenah, WI 54956 (US)
(72) Inventor: UMBARGER, Alison J., Appleton, WI 54911 (US)
(74) Representative: Vossius & Partner Patentanwälte Rechtsanwälte mbB
(86) International application number: PCT/US2013/055525
(87) International publication number: WO 2015/026313

(56) References cited:
- CN-C- 1 038 831
- DE-A1-102005 058 422
- GB-A- 1 557 426
- US-A- 4 241 129
- US-A1- 2002 036 368
- US-A1- 2003 031 891
- US-A1- 2005 053 794
- US-A1- 2007 259 142
- EISENMENGER-SITTNER ET AL.: 'Solid-State Wetting and Spreading of Tin (Sn) on Aluminium Interfaces.' VACUUM vol. 71, 2003, pages 253 - 259, XP055286359

## Description

### BACKGROUND OF THE INVENTION

This invention is concerned with metallized laminated structures for making rigid food containers and more particularly to metallized laminated structures for making rigid food containers having a lustrous metallic appearance.

It is often desirable to provide a metallic reflective appearance to plastic articles, such as, rigid plastic food containers for decorative purposes. One approach to achieving this objective is to metallize a sheet or film of thermoplastic material followed by thermoforming the metallized sheet into a desired shape. Metals which impart particular brilliant reflectivity include silver, gold, copper and aluminum. However, silver, gold and copper are very expensive for large-scale manufacturing use and aluminum is relatively brittle making it difficult to thermoform. Unfortunately, the degree to which such aluminum metallized polymeric substrates can be shaped or thermoformed without the metal rupturing and/or separating from the polymer surface is generally limited to forming involving relatively small dimensional changes. The visual effect of rupturing and/or separation of the metal from the polymeric substrate is a noticeable loss of specular reflectance.

Therefore, there is a need in the art for improved metallized laminate structures for fabricating rigid food containers that exhibit excellent specular reflectance after undergoing substantial dimensional changes.

### SUMMARY OF THE INVENTION

The present invention is concerned with thermoformed metallized food containers formed from a laminate comprising a first substrate of thermoformable thermoplastic material; a first metallized layer of vapor deposited tin bonded to the substrate of transparent thermoplastic material; a second metallized layer of vapor deposited aluminum bonded to the first metallized layer of tin; a second substrate of thermoformable thermoplastic material; and a recessed cavity having a food contact surface. The first substrate of thermoplastic material may be a monolayer sheet or multilayer film. Preferably, the first substrate of thermoformable thermoplastic material is transparent or translucent. The second substrate of thermoformable thermoplastic material may be a monolayer sheet or multilayer film. Preferably, the second substrate of thermoformable thermoplastic is black and/or opaque. The present invention may further comprise a layer of adhesive being in direct contact with the second metallized layer of aluminum and the second substrate of thermoformable thermoplastic material.

The present invention also provides an end-product of a metallized rigid food container having a food product sealed within a metallized laminate which has been formed into a recessed cavity and covered by a lidding film.

### BRIEF DESCRIPTION OF THE DRAWINGS

**FIG. 1** depicts one embodiment of a thermoformed container of the present invention.
**FIG. 2** illustrates an enlarged cross-sectional view of one embodiment of a metallized laminate of the present invention having a monolayer first substrate and a monolayer second substrate.
**FIG. 3** illustrates an enlarged cross-sectional view of another embodiment of a metallized laminate of the present invention having a monolayer first substrate and a monolayer second substrate,
**FIG. 4** illustrates an enlarged cross-sectional view of another embodiment of a metallized laminate of the present invention having a monolayer first substrate and a monolayer second substrate where both the first and the second substrates are metallized.
**FIG. 5** illustrates an enlarged cross-sectional view of an embodiment of a metallized laminate of the present invention having a multilayer first substrate and a monolayer second substrate.
**FIG. 6** illustrates an enlarged cross-sectional view of an embodiment of a metallized laminate of the present invention having a monolayer first substrate and a multilayer second substrate.
**FIG. 7** illustrates an enlarged cross-sectional view of the metallized laminate of **FIG. 3** that has been thermoformed into a three-dimensional shape.

### DETAILED DESCRIPTION OF THE INVENTION

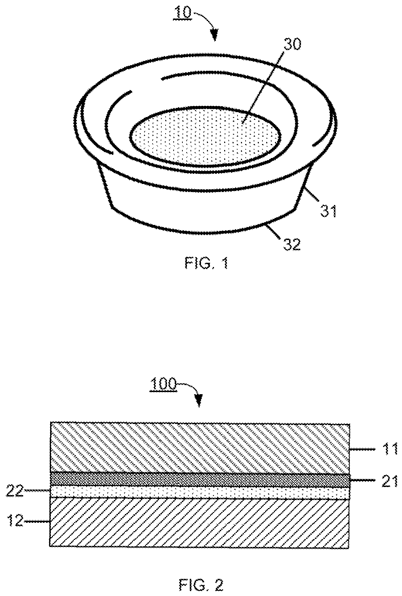

Referring now more particularly to **FIGS. 1-2** of the drawings, a preferred embodiment of container **10** embodying a laminate **100** of the present invention is shown. The container **10** is shaped or otherwise molded to form a recessed cavity **30** having at least one sidewall **31** and a bottom portion **32.** Container **10** may be formed from a laminate **100** which comprises a first thermoformable thermoplastic substrate **11** and a second thermoformable thermoplastic substrate **12.** For example, the first and second thermoplastic substrates may each include a material which is normally solid at room temperature and can be readily shaped or formed into a desired contour such as a bowl, cup and the like. Such thermoformable thermoplastic materials may include monolayer sheets and multilayer films formed from homopolymers or copolymers of polyethylene terephthalate, polyolefins including, but not limited to, polyethylenes and polypropylenes, polystyrenes, polyvinyl chlorides, cyclic olefins and blends thereof. In one preferred embodiment, first thermoplastic material **11** is a transparent monolayer sheet or transparent multilayer film of thermoformable polyethylene terephthalate, more preferably, a transparent monolayer sheet or multilayer film of oriented thermoformable polyethylene terephthalate, and most preferably, a transparent monolayer sheet or transparent multilayer film of biaxially oriented thermoformable polyethylene terephthalate. The thickness of the first thermoplastic material **11** may vary depending upon the desired end-use. Typically, the thickness of a monolayer of biaxially oriented polyethylene terephthalate film **11** is between about 48 gauge and about 150 gauge (about 12.2 micron and about 38.1 micron) and preferably, between about 50 gauge and 100 gauge (about 12.7 micron and 25.4 micron) and more preferably, about 75 gauge (about 19 micron). An example of a suitable commercially available thermoformable oriented polyethylene terephthalate film is 75 gauge Skyrol® SKC SL80C supplied by SKC, Inc. (Covington, GA). First thermoplastic material **11** forms a first outer surface of the container **10.**

Laminate **100** of container **10** further comprises a first metallized layer of tin **21** which may be prepared by applying tin to the first layer of thermoplastic material **11** by any conventional metallization technique known to those skilled in the art. An especially preferred metallization technique in the practice of this invention is vacuum deposition wherein the metal is vacuum evaporated and then deposited onto the polymer layer as described by William Goldie in Metallic Coating of Plastics, Vol. 1, Electrochemical Publications Limited, Chap. 12 (1968), the disclosure of which is incorporated herein by reference in its entirety. The first metallized layer of tin **21** may be preferably deposited by vapor deposition techniques, typically by applying the molten metal under vacuum by such techniques as electron beam evaporation, sputtering, induction heating, or thermal evaporation. A particularly preferred technique for metallization of tin is by electron beam vacuum evaporation deposition methods.

The tin is deposited at a layer thickness that forms an initial continuous metal film. Later, after laminate **100** is formed into its final shape, first metallized layer of tin **21** may be distributed more evenly over first substrate of thermoplastic material **11.** The thickness of the tin layer should be in a range such that it provides good adhesion to the substrate and has good mechanical strength. Thickness of a metal layer is most easily specified by reference to the optical density measured immediately after coating of the metal onto the substrate. The amount of tin applied to the first substrate of thermoplastic material **11** should adjusted to achieve an optical density of between about 1.0 and about 4.0 higher than the optical density of the first substrate of thermoplastic material **11.** First metallized layer of tin **21** may be formed as an uninterrupted continuous layer of metal or a non-continuous layer metallic islands extending over first substrate of transparent thermoplastic material **11.** In order to promote better adhesion between first substrate of thermoplastic material **11** and first metallized layer of tin **21,** it is also contemplated that the surface of first substrate of thermoplastic material **11** may be corona treated before the metallization process occurs. In a preferred embodiment of the present invention, first metallized layer of tin **21** is formed by electron beam vacuum deposition of tin onto a corona-treated surface of a 75 gauge (about 19 micron) thermoformable oriented polyethylene terephthalate film.

Without being bound to a particular theory, it is believed that the use of tin as the first metallized layer **21** in combination with conventional thermoforming processes operating at a temperature range of between 343° C and 371° C (650° F and 700° F) provides a synergistic result. Because tin has a melting point of about 232° C (about 449° F), it is molten during the thermoforming process and becomes more evenly distributed over the surface of first thermoplastic substrate **11.** The improved distribution of the tin provides a more lustrous metallic appearance to the formed container **10.**

Following the formation of the tin layer, a second metallized layer of aluminum **22** is applied over the first metallized layer of tin **21** by the same or different metallization technique used to create the tin layer. In a preferred embodiment, the second metallized layer of aluminum **22** is provided by thermal vacuum deposition of aluminum onto a first metallized layer of tin **21.** Second metallized layer of aluminum **22** may be applied as a continuous metal film over the tin, but after the forming process, the aluminum becomes discontinuous islands of metal covering the tin. The total amount of aluminum applied to the tin is adjusted to achieve a cumulative optical density of between 2.0 and about 4.0 higher than the optical density of the first layer of thermoplastic material **11.** In one embodiment, the optical density of the first metallized layer of tin **21** is 1.0 higher than the optical density of the first substrate of thermoplastic material **11** and the optical density of the second metallized layer of aluminum **22** is also 1,0 to achieve a cumulative optical density of 2.0 higher than the optical density of the first substrate of thermoplastic material **11.** In another embodiment, the optical density of the first metallized layer of tin **21** is 2.0 higher than the optical density of the first substrate of thermoplastic material **11** and the optical density of the second metallized layer of aluminum **22** is 1.0 to achieve a cumulative optical density of 3.0 higher than the optical density of the first substrate of thermoplastic material **11.** In a preferred embodiment, the optical density of the first metallized layer of tin **21** is 3.0 higher than the optical density of the first substrate of thermoplastic material **11** and the optical density of the second metallized layer of aluminum **22** is 1.0 to achieve a cumulative optical density of 4.0 higher than the optical density of the first substrate of thermoplastic material **11.**

Those skilled in the art will recognize that a typical vacuum deposited layer of aluminum having an optical density of 1.0 will be approximately equivalent to a thickness of about 364 Angstrom. In a preferred embodiment, the second metallized layer of aluminum **22** is provided by thermal vacuum deposition of aluminum onto a first metallized layer of tin **21** which was formed by electron beam vacuum deposition of tin onto a corona-treated surface of a 75 gauge (about 19 micron) thermoformable oriented polyethylene terephthalate film. Second metallized layer of aluminum **22** may be formed as a continuous layer or a non-continuous layer extending over first metallized layer of tin **21.**

As depicted in **FIG. 2****,** laminate **100** of container **10** still further comprises a second substrate of thermoformable thermoplastic substrate **12** which is applied over the second metallized layer of aluminum **22.** As previously mentioned, second substrate **12** may be formed from any thermoformable thermoplastic material which may include a monolayer sheet or multilayer film. In one embodiment, substrate **12** is a sheet comprising homopolymers or copolymers of polyethylene terephthalate, polyolefins including, but not limited to, polyethylenes and polypropylenes, polystyrenes, polyvinyl chlorides, cyclic olefins and blends thereof. In one preferred embodiment, second thermoplastic substrate **12** comprises a monolayer sheet or multilayer film of thermoformable polyethylene terephthalate In another preferred embodiment, second thermoplastic substrate **12** comprises a monolayer sheet or multilayer film of thermoformable polystyrene. In still another preferred embodiment, second thermoplastic substrate **12** is a black or opaque monolayer sheet or multilayer film of thermoformable polyethylene terephthalate, and more preferably, a black or opaque monolayer sheet or multilayer film of amorphous thermoformable polyethylene terephthalate. In an alternative preferred embodiment, second thermoplastic substrate **12** is a black or opaque monolayer sheet or multilayer film of thermoformable high-impact polystyrene. The thickness of the second thermoplastic substrate **12** may also vary depending upon the desired end-use. Typically, the thickness of second thermoplastic substrate **12** is between 5 and 25 mil (127 and 635 micron) and preferably, between 10 and 20 mil (254 and 508 micron), more preferably, between 12 and 15 mil (304.8 and 381 micron), and most preferably about 13.25 mil (336.6 micron). It is understood that in order to provide a black color and/or opaque appearance, the polymer or polymer blends used to form second thermoplastic substrate **12** may include dyes, fillers, pigments, carbon black and the like. An example of a suitable commercially available amorphous thermoformable polyethylene terephthalate is Performance™ PET 1708HS supplied by StarPet, Inc. (Asheboro, N.C.). A commercially available example of high-impact polystyrene is Polystyrene 825E supplied by Total Petrochemicals USA, Inc. (La Porte, TX).

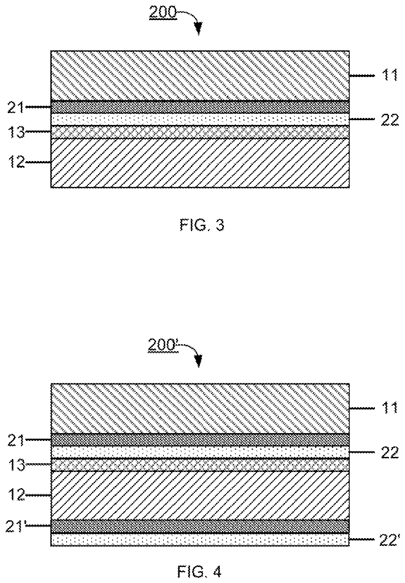

Referring now to **FIG. 3**, there is illustrated an alternative embodiment of laminate **200** which may be used to form container **10.** Laminate **200** comprises the same or similar monolayer films described above for first thermoplastic substrate **11,** first metallized layer of tin **21,** second metallized layer of aluminum **22,** and second thermoplastic substrate **12** for laminate **100,** but further includes an adhesive layer **13** which is in direct contact with the second metallized layer of aluminum **22** and the second layer of thermoplastic substrate **12.** An example of a suitable commercially available adhesive for use as adhesive layer **13** is SERFENE™ 2010 which is a polyvinylidene chloride (PVDC) emulsion adhesive system supplied by Dow Chemical Company, Inc. (Midland, MI).

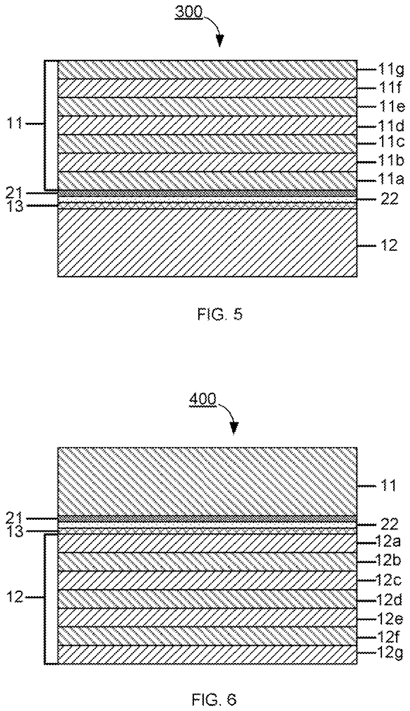

**FIG. 5** illustrates another preferred embodiment of a metallized laminate **300** of the present invention having a multilayer first thermoformable thermoplastic substrate **11** and a monolayer second thermoformable thermoplastic substrate **12.** Multilayer thermoformable thermoplastic substrate **11** may be formed as a coextruded blown film comprising two or more film layers. In this particular embodiment, substrate **11** is an eleven-layer film structure having a first film layer **11a**, a second film layer **11b,** a third film layer **11c,** a fourth film layer **11d,** a fifth film layer **11e,** a sixth film layer **11f,** and a seventh film layer **11g.** First film layer **11a** may comprise polyethylene, preferably a blend of ultra-low density polyethylene and linear low density polyethylene and more preferably, a blend of about 87.7% by weight ultra-low density polyethylene, about 10% by weight linear low density polyethylene and about 2.3% by weight processing and antiblock additives. An example of a suitable commercially available ultra-low density polyethylene is ATTANE™ 4701G supplied by Dow Chemical Company (Midland, MI). A commercially available example of linear low density polyethylene is ExxonMobil™ 1001.32 supplied by ExxonMobil Chemical Company (Houston, TX). Film layers **11b** and **11f** serve as a tie layer bonding layers **11a** to **11c,** and **11e** to **11g,** respectively. These layers may each comprise anhydride-modified polyethylene. Preferably, layers **11b** and **11f** each comprise a blend of anhydride-modified polyethylene and polyethylene, more preferably, a blend of anhydride-modified polyethylene and ultra-low density polyethylene, and most preferably, a blend of between 10% and 70% by weight anhydride-modified polyethylene and between 30% and 90% by weight ultra-low density polyethylene. Examples of suitable commercially available anhydride-modified polyethylene include Plexar® PX 3308 supplied by Equistar Chemicals, LP (Houston, TX) and Bynel® 41E710 supplied by E. I. du Pont de Nemours and Company (Wilmington, DE). Film layers **11c** and **11e** serve as oxygen barrier layers and may each comprise polyamide, preferably, a blend of polyamides, more preferably, a blend of amorphous polyamide and crystalline polyamide, and most preferably, a blend of about 15% by weight amorphous polyamide and about 85% by weight of crystalline polyamide. A suitable commercially available example of amorphous polyamide is Grivory G21 supplied by EMS-Chemie (North America) Inc. (Sumter, SC). An example of a suitable commercially available crystalline polyamide is Ultramid® 836 01 supplied by BASF Polyamides (Freeport, TX),

Substrate **11** of laminate **300** may further include a third oxygen barrier layer **11d** positioned between layers **11c** and **11e.** Layer **11d** may comprise an ethylene vinyl alcohol copolymer. The final film layer of substrate **11** is layer **11g** which serves as an outer abuse layer and may comprise polyethylene terephthalate. An example of a suitable commercially available polyethylene terephthalate is Performance™ PET 1708 supplied by StarPet Inc. (Asheboro, NC). In this embodiment, metallized laminate **300** further includes a first metallized layer of tin **21** deposited on a corona-treated surface of film layer **11a,** a second metallized layer of aluminum **22** applied to tin layer **21,** an adhesive layer **13** which is in direct contact with the second metallized layer of aluminum **22** and the second layer of thermoplastic substrate **12.** A suitable adhesive material for use as adhesive layer **13** is a polyvinylidene chloride (PVDC) emulsion adhesive system such as SERFENE™ 2010 supplied by Dow Chemical Company, Inc. (Midland, MI). Second substrate **12** comprises a sheet of high-impact polystyrene having a thickness approximately 20 mil (508 micron).

Turning now to **FIG. 6****,** there is illustrated still another preferred embodiment of a metallized laminate **400** of the present invention having a monolayer first thermoformable thermoplastic substrate **11** and a multilayer second thermoformable thermoplastic substrate **12.** Laminate **400** further includes a first metallized layer of tin **21** deposited on a corona-treated surface of substrate **11,** a second metallized layer of aluminum **22** applied to tin layer **21**, an adhesive layer **13** which is in direct contact with the second metallized layer of aluminum **22** and substrate **12.** Substrate **11** may comprise a transparent thermoformable film of biaxially oriented polyethylene terephthalate. An example of a suitable commercially available thermoformable oriented polyethylene terephthalate film is 75 gauge Skyrol® SKC SL80C supplied by SKC, Inc. (Covington, GA). Adhesive layer **13** may be any suitable material which bonds comprise a polyvinylidene chloride (PVDC) emulsion adhesive system such as SERFENE™ 2010 supplied by Dow Chemical Company, Inc. (Midland, MI). As depicted, substrate **12** includes a first film layer **12a,** a second film layer **12b,** a third film layer **12c,** a fourth film layer **12d,** a fifth film layer **12e,** a sixth film layer **12f,** and a seventh film layer **12g.** First film layer **12a** comprises a 279.4 micron (11 mil) thick high-impact polystyrene such as Polystyrene 825E supplied by Total Petrochemicals USA, Inc. (La Porte, TX). Film layer **12b** may comprise any adhesive which adheres polystyrenes to polyolefins such as polyethylene. One such adhesive is Avadyne® AV5210/CA500-83 supplied by Henkel Corporation (Gulph Mills, PA). Film layer **12c** includes polyethylene, preferably, a blend of ultra-low density polyethylene and linear low density polyethylene. In one preferred embodiment, layer **12c** includes a blend of about 64% by weight ultra-low density polyethylene and about 35% by weight linear low density polyethylene. Film layers **12d** and **12f** serve as tie layers bonding layers **12c** to **12e,** and **12e** to **12g,** respectively, and may each comprise anhydride-modified polyethylene. A suitable material for use in layers **12d** and **12f** includes, but is not limited to, LyondellBasell Plexar® PX3747 supplied by Lyondell Chemical Company (Houston, TX). Layer **12e** functions as an oxygen barrier and preferably includes ethylene vinyl alcohol copolymer. The seventh film layer **12g** is a sealant layer capable of heat sealing to another material having a similar chemical composition such as, for example, a lidding film placed over recessed cavity **30.** Film layer **12g** may comprise a polyolefin, including ethylene homopolymers and copolymers such as polyethylene copolymer and ethylene vinyl acetate copolymer. In a preferred embodiment, layer **12g** comprises low density ethylene vinyl acetate copolymer having 5% vinyl acetate content. One such commercially available example is LyondellBasell Petrothene® NA442051 supplied by Lyondell Chemical Company (Houston, TX).

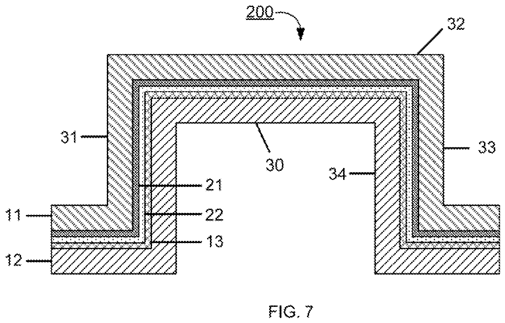

In **FIG. 7****.** there is illustrated thermoformed laminate **200** having a cup or bowl shaped recessed cavity **30.** As depicted, the first substrate **11** serves as a first outer surface **33** of recessed cavity **30**, while second substrate **12** serves as a second outer surface **34**. In the forming operation, the laminate is shaped in a manner such that at least a portion of the laminate undergoes an extension or stretching in at least one dimension in order to form a recessed cavity **30.** Any conventional forming process may be used for shaping the laminates of the present invention into its final form. Exemplary forming processes include differential air pressure thermoforming, vacuum forming, plug assist-vacuum forming, cold rolling, draw forming, impact forming, hydroforming and the like. An especially preferred conventional thermoforming process is one where the plastic laminate is formed at a temperature of between about 343° C and about 371° C (about 650° F and about 700° F). In one embodiment, the laminates of the present invention are thermoformed to provide a recessed cavity having a draw depth of at least 0.635 centimeter (0.25 inch). In another embodiment, the laminates of the present invention are thermoformed to provide a recessed cavity having a draw depth of at least 1.91 centimeter (0.75 inch).

Many modifications and other embodiments of the invention set forth herein will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments disclosed to be included within the scope of the appended claims. Although specific terms are employed herein, they are used in a generic and descriptive sense only and not for purposes of limitation.

## Claims

1. A thermoformed metallized container formed from a laminate comprising:
a first substrate of thermoformable transparent thermoplastic material;
a first metallized layer of vapor deposited tin bonded to the first substrate;
a second metallized layer of vapor deposited aluminum bonded to the first metallized layer of tin;
a second substrate of thermoformable thermoplastic material; and
a recessed cavity having a food contact surface.

2. The container of claim 1, wherein the first metallized layer of tin is substantially continuous across the surface of the first substrate.

3. The container of claim 1, wherein the second metallized layer of aluminum is non-continuous across the surface of the first metallized layer of tin.

4. The container of claim 1, wherein the first substrate of thermoplastic material is transparent.

5. The container of claim 1, wherein the second substrate of thermoplastic material is black or opaque.

6. The container of claim 1, wherein the first substrate of thermoplastic material is polyethylene terephthalate.

7. The container of claim 1, wherein the first substrate of thermoplastic material is polyethylene.

8. The container of claim 1, wherein the second substrate of thermoplastic material comprises amorphous polyethylene terephthalate or high-impact polystyrene.

9. The container of claim 1, wherein the first substrate of thermoplastic material is a first outer surface of the container.

10. The container of claim 1, wherein the second substrate of thermoplastic material is a second outer surface of the container.

11. The container of claim 1, wherein the second substrate of thermoplastic material has a thickness of at least about 336.6 micron (about 13.4 mil).

12. The container of claim 1, further comprising a layer of adhesive in direct contact with the second metallized layer of aluminum and the second substrate of thermoplastic material.

13. The container of claim 1, wherein the recessed cavity has a draw depth of at least about 0.635 centimeter (about 0.25 inch).

14. The container of claim 1, further comprising a lidding film covering the recessed cavity and sealed to the container.

15. The container of claim 1, wherein the container is a food container.

## Patentansprüche

1. Warmgeformter metallisierter Behälter, der aus einem Laminat geformt ist, umfassend:
ein erstes Substrat aus einem warmformbaren transparenten thermoplastischen Material;
eine erste metallisierte Schicht aus aufgedampftem Zinn, die an das erste Substrat gebunden ist;
eine zweite metallisierte Schicht aus aufgedampftem Aluminium, die an die erste metallisierte Schicht aus Zinn gebunden ist;
ein zweites Substrat aus einem warmformbaren thermoplastischen Material; und
eine eingelassene Vertiefung mit einer Lebensmittelkontaktoberfläche.

2. Behälter gemäß Anspruch 1, wobei die erste metallisierte Schicht aus Zinn im Wesentlichen kontinuierlich über die Oberfläche des ersten Substrats vorliegt.

3. Behälter gemäß Anspruch 1, wobei die zweite metallisierte Schicht aus Aluminium nichtkontinuierlich über die Oberfläche der ersten metallisierten Schicht aus Zinn vorliegt.

4. Behälter gemäß Anspruch 1, wobei das erste Substrat aus thermoplastischem Material transparent ist.

5. Behälter gemäß Anspruch 1, wobei das zweite Substrat aus thermoplastischem Material schwarz oder lichtundurchlässig ist.

6. Behälter gemäß Anspruch 1, wobei das erste Substrat aus thermoplastischem Material Polyethylenterephthalat ist.

7. Behälter gemäß Anspruch 1, wobei das erste Substrat aus thermoplastischem Material Polyethylen ist.

8. Behälter gemäß Anspruch 1, wobei das zweite Substrat aus thermoplastischem Material amorphes Polyethylenterephthalat oder schlagzähes Polystyrol umfasst.

9. Behälter gemäß Anspruch 1, wobei das erste Substrat aus thermoplastischem Material eine erste Außenoberfläche des Behälters ist.

10. Behälter gemäß Anspruch 1, wobei das zweite Substrat aus thermoplastischem Material eine zweite Außenoberfläche des Behälters ist.

11. Behälter gemäß Anspruch 1, wobei das zweite Substrat aus thermoplastischem Material eine Dicke von wenigstens etwa 336,6 Mikrometer (etwa 13,4 mil) aufweist.

12. Behälter gemäß Anspruch 1, ferner umfassend eine Klebstoffschicht in direktem Kontakt mit der zweiten metallisierten Schicht aus Aluminium und dem zweiten Substrat aus thermoplastischem Material.

13. Behälter gemäß Anspruch 1, wobei die eingelassene Vertiefung eine Ziehtiefe von wenigstens etwa 0,635 Zentimeter (etwa 0,25 Inch) aufweist.

14. Behälter gemäß Anspruch 1, ferner umfassend eine Deckelfolie, die die eingelassene Vertiefung bedeckt und an den Behälter gesiegelt ist.

15. Behälter gemäß Anspruch 1, wobei der Behälter ein Lebensmittelbehälter ist.

## Revendications

1. Contenant métallisé thermoformé formé d'un stratifié comprenant :
un premier substrat constitué d'un matériau thermoplastique transparent thermoformable ;
une première couche métallisée d'étain déposé en phase vapeur, liée au premier substrat ;
une deuxième couche métallisée d'aluminium déposé en phase vapeur, liée à la première couche métallisée d'étain ;
un deuxième substrat constitué d'un matériau thermoplastique thermoformable ; et
une cavité encastrée ayant une surface destinée à entrer en contact avec des aliments.

2. Contenant selon la revendication 1, dans lequel la première couche métallisée d'étain est sensiblement continue à travers la surface du premier substrat.

3. Contenant selon la revendication 1, dans lequel la deuxième couche métallisée d'aluminium est non continue à travers la surface de la première couche métallisée d'étain.

4. Contenant selon la revendication 1, dans lequel le premier substrat constitué d'un matériau thermoplastique est transparent.

5. Contenant selon la revendication 1, dans lequel le deuxième substrat constitué d'un matériau thermoplastique est noir ou opaque.

6. Contenant selon la revendication 1, dans lequel le premier substrat constitué d'un matériau thermoplastique est en téréphtalate de polyéthylène.

7. Contenant selon la revendication 1, dans lequel le premier substrat constitué d'un matériau thermoplastique est en polyéthylène.

8. Contenant selon la revendication 1, dans lequel le deuxième substrat constitué d'un matériau thermoplastique comprend un téréphtalate de polyéthylène amorphe ou un polystyrène à haute résistance aux chocs.

9. Contenant selon la revendication 1, dans lequel le premier substrat constitué d'un matériau thermoplastique est une première surface extérieure du contenant.

10. Contenant selon la revendication 1, dans lequel le deuxième substrat constitué d'un matériau thermoplastique est une deuxième surface extérieure du contenant.

11. Contenant selon la revendication 1, dans lequel le deuxième substrat constitué d'un matériau thermoplastique a une épaisseur d'au moins environ 336,6 microns (environ 13,4 millièmes de pouce).

12. Contenant selon la revendication 1, comprenant en outre une couche d'adhésif directement en contact avec la deuxième couche métallisée d'aluminium et le deuxième substrat constitué d'un matériau thermoplastique.

13. Contenant selon la revendication 1, dans lequel la cavité encastrée a une profondeur de formage d'au moins environ 0,635 centimètre (environ 0,25 pouce) .

14. Contenant selon la revendication 1, comprenant en outre un film d'operculage couvrant la cavité encastrée et appliqué hermétiquement sur le contenant.

15. Contenant selon la revendication 1, le contenant étant un contenant alimentaire.
